# EUROPÄISCHE PATENTSCHRIFT

(11) **EP 2 275 700 B1**
(45) Veröffentlichungstag und Bekanntmachung des Hinweises auf die Patenterteilung: **12.11.2014**
(21) Anmeldenummer: 10005230.7
(22) Anmeldetag: 19.05.2010
(51) Int. Cl.: F16D 27/112

(54) **Elektromagnetische Reibschaltkupplung**
Electromagnetic friction coupling
Embrayage à friction électromagnétique

(30) Priorität: 13.07.2009 DE 102009033179
(43) Veröffentlichungstag der Anmeldung: 19.01.2011
(73) Patentinhaber: LICOS Trucktec GmbH, 88677 Markdorf (DE)
(72) Erfinder: Krafft, Rainer, 88633 Heiligenberg (DE); Dangel, Jürgen, 88213 Ravensburg (DE)
(74) Vertreter: Otten, Roth, Dobler & Partner

(56) Entgegenhaltungen:
- EP-A2- 1 353 051
- EP-A2- 1 577 142
- EP-A2- 1 748 207
- DE-A1-102004 015 655
- US-A1- 2003 192 763

## Beschreibung

Die Erfindung betrifft eine elektromagnetische Reibschaltkupplung nach dem Oberbegriff des Anspruchs 1.

### Stand der Technik:

Elektromagnetische Reibschaltkupplungen sind insbesondere aus dem Bereich des Fahrzeugbaus in vielen verschiedenen Bauweisen bekannt. Häufig werden sie dazu eingesetzt, einen Teil der mechanischen Leistung eines Hauptantriebsaggregats schaltbar an ein oder mehrere Hilfsaggregate zu verteilen. Es sind auch einige Konstruktionen bekannt, die eine elektromagnetische Reibschaltkupplung mit einem Wirbelstromantrieb kombinieren. Hierdurch kann der Stillstand eines Hilfsaggregats vermieden bzw. für energiesparenden Betrieb eine gegenüber dem Antrieb verringerte Drehzahl übertragen werden.

Beispielsweise beschreibt die EP 1 353 051 A2 eine elektromagnetische Reibschaltkupplung für eine Kühlmittelpumpe, wobei der Rotor mit Magnetmitteln ausgestattet ist. Dabei kann die Reibschaltkupplung mit den Magnetmitteln durch Wirbelstrominduktion vergleichsweise langsamere Drehbewegungen übertragen, wenn der Rotor nicht in Reibkontakt mit einem zur Bewegungskopplung vorgesehenen Kupplungselement steht.

Um die Übertragung von Drehbewegungen nach einem zusätzlichen Wirkungsprinzip zu unterstützen, müssen in die Konstruktion einer elektromagnetischen Reibschaltkupplung weitere Bauteile aufgenommen und berücksichtigt werden. Dabei steht in bekannten Konstruktionen einer weiteren Vereinfachung und Verkleinerung das Problem entgegen, dass die Wärme, die durch Wirbelströme in der Kupplung entsteht, an die Umgebung abgeleitet werden muss.

### Aufgabe und Vorteile der Erfindung:

Aufgabe der Erfindung ist es, eine vergleichsweise einfach und raumsparend aufgebaute Kupplung bereitzustellen. Insbesondere soll sich die erfindungsgemäße Reibschaltkupplung für Anwendungen im Fahrzeugbau, z. B. als Lüfterkupplung, auch in kleinen Stückzahlen kostengünstig herstellen lassen.

Diese Aufgabe wird durch eine elektromagnetische Reibschaltkupplung mit den Merkmalen des Anspruchs 1 gelöst. In den abhängigen Ansprüchen sind zweckmäßige und vorteilhafte Ausgestaltungen der Erfindung aufgezeigt.

Die Erfindung geht von einer elektromagnetischen Reibschaltkupplung aus, die einen aus einem ebenen Flachteil bestehenden Scheibenrotor mit zwei sich flächig erstreckenden Hauptseiten, ein weiteres frei drehbar gelagertes Kupplungselement, das durch schaltbaren Reibkontakt vom Rotor mitgenommen werden kann, sowie Elemente zur Übertragung einer Drehbewegung nach dem Prinzip eines Wirbelstromantriebs umfasst. Der Kern der Erfindung ist darin zu sehen, dass ein Wirbelstromelement an einem äußeren Randbereich des Scheibenrotors angesetzt ist.

Die erfindungsgemäße Kupplung kann in der Weise ausgeführt werden, dass die Ankerscheibe drehfest mit beispielsweise dem freidrehbaren Kupplungselement verbunden ist und durch elektrischen Stromfluss in der Elektromagnetspule mechanisch eingekuppelt werden kann. Ebenso ist eine Ausführung der Erfindung möglich, bei der die Ankerscheibe drehfest z. B. am Scheibenrotor befestigt ist, wobei eine Bestromung der Magnetspule den ausgekuppelten Zustand erzeugt. Der Scheibenrotor kann beispielsweise als kreisförmige Scheibe aus einem Stahlblech ausgestanzt oder beispielsweise in ebener Scheibenform durch einen Laserschneidprozess hergestellt sein. Vom daran angebrachten Wirbelstromelement abgesehen besteht der Scheibenrotor ausschließlich aus dem scheibenförmigen, ebenen Flachteil. Vorzugsweise besteht der Scheibenrotor aus weichmagnetischem Material. Zur Verstärkung der Anzugskraft der Anzugskraft auf eine Ankerscheibe können auf dem Scheibenrotor mehrere kreisringförmige Segmente konzentrisch zur Rotordrehachse magnetisch voneinander abgegrenzt werden.

Erfindungsgemäß ist am äußeren Rand des Scheibenrotors ein Bereich vorgesehen, an dem ein Wirbelstromelement, insbesondere aus einem Metall mit hoher elektrischer Leitfähigkeit bestehend, am Scheibenrotor angebracht wird. Je nach Materialkombination von Scheibenrotor und Wirbelstromelement kann vorteilhaft eine geeignete Befestigung des Wirbelstromelements am Scheibenrotor gewählt werden. So können die beiden Bauteile beispielsweise kraftschlüssig z. B. durch Aufschrauben, Aufnieten oder Kleben oder beispielsweise formschlüssig z. B. durch Aufgießen oder Fließpressen miteinander verbunden werden.

In radialer Richtung kann das Wirbelstromelement vom Randbereich des Scheibenrotors ausgehend beliebig dimensioniert werden. Auf diese Weise lässt sich das Wirbelstromelement vorteilhaft an eine zu übertragende Drehzahl anpassen. Um die durch Wirbelströme erzeugte Wärme an die Umgebung abzuführen, kann das Wirbelstromelement über die ringförmige Zone, in der Wirbelströme erzeugt werden, hinausragen. In axialer Richtung kann sich das Wirbelstromelement in den Bereich eines Gehäuses eines Elektromagneten erstrecken. Das Wirbelstromelement kann das Gehäuse im wesentlichen überlappen.

In einer bevorzugten Ausführung der Erfindung wird das Wirbelstromelement an einem äußeren Randbereich einer sich flächig erstreckenden Hauptseite des Scheibenrotors angebracht. Insbesondere ist es bevorzugt, das Wirbelstromelement an jener Hauptseite des Scheibenrotors anzubringen, die vom Elektromagneten weiter entfernt liegt, um eine ungünstige Führung des magnetischen Flusses zu vermeiden. Bei der Verbindung der Bauteile über Seiten, deren Flächen senkrecht zur Kupplungsdrehachse stehen, ergibt sich der Vorteil, dass die Größe der Verbindungsfläche vergleichsweise einfacher an die auf die Verbindung wirkenden Kräfte angepasst werden kann. Ein weiterer Vorteil ist darin zu sehen, dass die äußere Mantelfläche des Scheibenrotors zumindest teilweise frei zugänglich bleibt, sodass diese Außenfläche zur Führung des magnetischen Flusses genutzt werden kann.

Eine weitere bevorzugte Ausführung der Erfindung besteht darin, dass am frei drehbaren Kupplungselement Magnete in der Weise angebracht sind, dass die Magnete bei einer Drehbewegung bezüglich des Wirbelstromelements in diesem Wirbelströme induzieren. Auf diese Weise kann vorteilhaft vermieden werden, dass die Magnete entweder an einem separaten Bauteil angebracht werden müssen oder bei Anbringung an der Ankerscheibe die Trägheitskräfte bei axialer Bewegung erhöhen.

Vorzugsweise weist das Wirbelstromelement Kühlkörper zur Ableitung von Wärme auf. Insbesondere ist es vorteilhaft, wenn Kühlkörper am Wirbelstromelement beispielsweise einstückig ausgebildet sind. Die Kühlkörper vergrößern vorteilhaft die Fläche für die Abfuhr von Wärme, die z. B. insbesondere durch die Wirbelströme erzeugt wird.

Eine weitere bevorzugte Ausführung der Erfindung besteht darin, dass eine Elektromagnetspule zumindest teilweise von einem Gehäuse aus magnetisch leitendem Material in einer Weise umgeben ist, dass eine Fläche des Gehäuses zumindest teilweise eine äußere Mantelfläche des Scheibenrotors berührungslos umgibt. Damit kann ein Übergang für die Magnetfeldlinien geschaffen werden, sodass ein nicht unerheblicher Teil des magnetischen Flusses die Mantelfläche durchdringt. Dies bietet den Vorteil, dass der magnetische Fluss überwiegend radial geführt wird und somit axiale Kräfte und dadurch hervorgerufene Spannungen vermieden werden können.

Vorzugsweise ist eine Elektromagnetspule zumindest teilweise aus magnetisch leitendem Material umgeben, wobei das Gehäuse in Bezug auf den Scheibenrotor und ein Element zwischen Gehäuse und Kupplungsdrehachse, das flächig am Scheibenrotor anliegt, aufeinander abgestimmt sind, dass der magnetische Fluss mehrheitlich über das Element zwischen Gehäuse und Kupplungsdrehachse geführt wird. Das Element kann beispielsweise eine weichmagnetische Ringscheibe sein, die nahe der Kupplungsdrehachse am Scheibenrotor anliegt, sodass der magnetische Fluss vom Scheibenrotor unmittelbar in die Ringscheibe eintreten und beispielsweise über eine äußere Mantelfläche der Ringscheibe und einen möglichst kleinen Zwischenraum berührungslos an das magnetisch leitende Gehäuse der Kupplung radial weitergeführt werden kann. Dadurch werden Axialkräfte auf den Scheibenrotor weiter reduziert.

Eine weitere bevorzugte Ausführung der Erfindung besteht darin, dass das Wirbelstromelement Bereiche aus magnetisch leitfähigem Material aufweist. Insbesondere ist das magnetisch leitfähige Material vorzugsweise derart am Wirbelstromelement angebracht, dass sich Bereiche des Wirbelstromelements aus elektrisch hochleitfähigem Material in axialer Richtung zwischen den magnetisch leitfähigen Bereichen und den Magneten, die Wirbelströme erregen können, befinden. Auf diese Weise bietet das Wirbelstromelement einen magnetischen Rückschluss für den magnetischen Fluss, den die Wirbelströme erzeugenden Magnete hervorrufen.

In einer besonders bevorzugten Ausführung der Erfindung weist das weitere Kupplungselement eine Vorrichtung auf, sodass eine zylindrische oder kegelstumpfförmige Bohrung bzw. Aussparung eines anzutreibenden Maschinenteils am Kupplungselement zur Kupplungsdrehachse mit einem Bohrungsdurchmesser zentriert angebracht werden kann, der kleiner ist als ein Durchmesser, auf dem sich die Magnete des Wirbelstromantriebs befinden. Die zentrierende Vorrichtung kann beispielsweise als kreisringförmige axiale Erhöhung oder Verlängerung z. B. am frei drehbaren Kupplungselement ausgebildet sein. Vorzugsweise wird die zentrierende Vorrichtung passgenau zur Aussparung des Maschinenteils, beispielsweise einer Lüfterradnabe, hergestellt. Durch die in Bezug auf den Wirbelstromantrieb radial innen liegende Aufnahme kann die Kupplung axial kompakt gebaut werden.

### Ausführungsbeispiel:

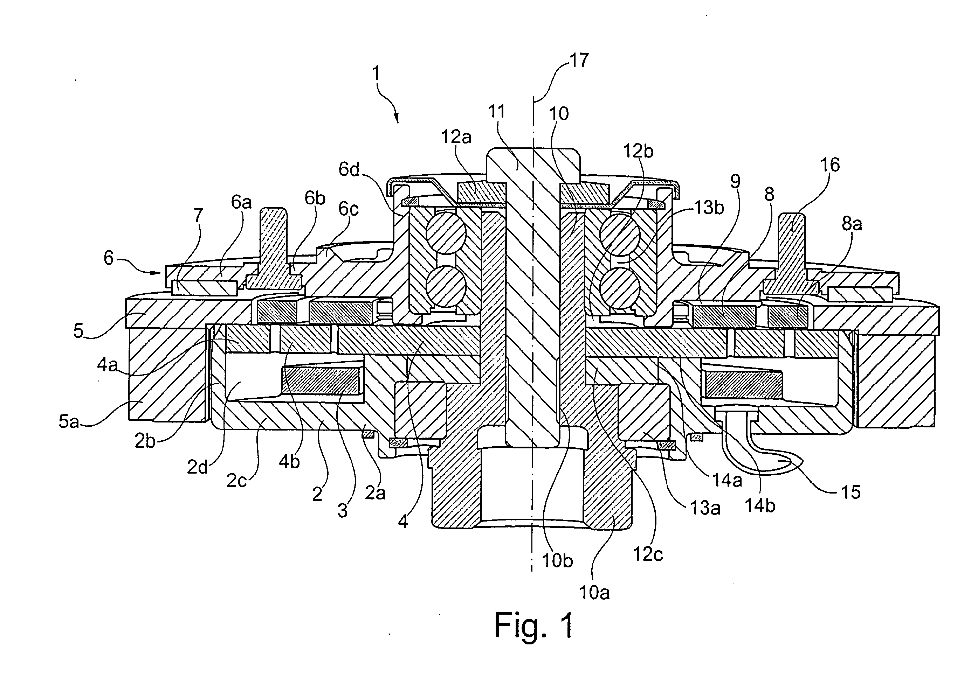

Anhand eines in der Zeichnung schematisch dargestellten Ausführungsbeispiels der erfindungsgemäßen Reibschaltkupplung werden weitere Merkmale und Vorteile der Erfindung beschrieben.

Die einzige Figur zeigt einen schematisch dargestellten Schnitt entlang der Drehachse durch eine erfindungsgemäße Reibschaltkupplung.

In der Figur ist eine elektromagnetische Reibschaltkupplung 1 abgebildet, die für den Antrieb eines nicht gezeigten Lüfterrads ausgelegt ist. Die Kupplung 1 besitzt ein ringförmiges Gehäuse 2. Wände 2a, 2b, 2c umschließen eine ringförmige Kammer im Gehäuse 2, in der eine Elektromagnetspule 3 untergebracht ist. Über eine Durchführung 15 wird die Elektromagnetspule an eine elektrische Stromversorgung angeschlossen. Die ringförmige Kammer 2d wird an einer vierten Seite, deren Fläche senkrecht zu einer Kupplungsdrehachse 17 steht, von einem Scheibenrotor 4 abgedeckt.

Der Scheibenrotor 4 ist auf eine Drehwelle 10 aufgesteckt. Am Gehäuse 2 ist die Drehwelle 10 frei drehbar mittels des Kugellagers 13a angebracht, das am inneren Durchmesser des ringförmigen Gehäuses 2 sitzt. Die Drehwelle 10 trägt ihrerseits ein Kupplungselement 6, das mit Hilfe eines Kugellagers 13b in der Lagerhülse 6d sowohl zum Gehäuse 2 als auch zum Scheibenrotor 4 konzentrisch und frei drehbar gelagert ist. Das Kupplungselement 6 ist als Abtriebsflansch zur Anbringung eines Lüfterrads vorgesehen.

An der Seite der Gehäusewand 2c ragt ein Zapfen 10a der Drehwelle 10 aus dem Kupplungsgehäuse 2 heraus, an dem ein nicht abgebildetes Antriebselement beispielsweise ein Riementreibrad, angebracht werden kann. Die Drehwelle 10 ist als Hohlwelle ausgebildet und weist ein Gewinde 10b auf, in das eine Klemmschraube 11 verschraubt ist. Mit Hilfe eines Klemmrings 12a und der Distanzringe 12b und 12c werden der Scheibenrotor 4 und die Kugellager 13b und 13a in axialer Richtung so zueinander angeordnet, dass das Kupplungsgehäuse 2, der Scheibenrotor 4 und das Kupplungselement 6 berührungsfrei zueinander frei drehbar gelagert sind.

Mit Federn 9 ist eine Ankerscheibe 8 am Kupplungselement 6 an der dem Scheibenrotor 4 zugewandten Seite axial beweglich angebracht. Daher wird bei stromdurchflossener Spule 3 die Ankerscheibe 8 axial gegen die Kraft der Federn 9 an den Scheibenrotor 4 angezogen. Sowohl der Rotor 4 als auch die Ankerscheibe 8 weisen mehrere ringförmige konzentrisch zur Kupplungsdrehachse 17 angeordnete Segmente 4, 4a, 4b, 8, 8a auf, die radial zueinander so versetzt sind, dass der vom Elektromagneten 3 erzeugte magnetische Fluss abwechselnd die Ankerscheibe 8 und den Scheibenrotor 4 durchströmt.

Die äußere Ringwand 2b des Kupplungsgehäuses 2 ist in axialer Richtung gegenüber der inneren Ringwand 2a höher gezogen, sodass die Ringwand 2b die Mantelfläche des Rotors 4 berührungsfrei umgibt. Dadurch wird vorteilhaft erreicht, dass der magnetische Fluss bei Betätigung der Kupplung im wesentlichen in radialer Richtung geführt wird und nur geringe Kräfte in axialer Richtung entstehen. Bei Betätigung der Kupplung wird daher der äußerste Rand des Rotors 4 in axialer Richtung kaum bewegt und im eingekuppelten Zustand mechanische Spannungen im Scheibenrotor 4 weitgehend vermieden.

Auf der der Ankerscheibe 8 zugewandten Seite des Rotors 4 ist am äußersten Segment 4a ein ringförmiges Wirbelstromelement 5 konzentrisch zur Kupplungsdrehachse angebracht. Der Wirbelstromring 5 kann mit dem Rotorsegment 4a beispielsweise verklebt oder verschraubt sein.

Weil der Wirbelstromring 5 radial erheblich über den Außendurchmesser des Kupplungsgehäuses 2 hinausragt, sind Kühlkörper 5a am Wirbelstromring 5 in der Weise ausgebildet, dass sie sich vom Wirbelstromring 5 ausgehend in axialer Richtung entlang des Kupplungsgehäuse 2 an dessen Außenseite berührungslos erstrecken. Aufgrund der vergleichsweise einfachen Geometrie des Wirbelstromrings 5 und der Kühlkörper 5a können diese vorteilhaft gemeinsam beispielsweise mit preisgünstigen Gussformen einstückig hergestellt werden. Das genannte Beispiel eines Herstellungsverfahrens bietet zudem die Möglichkeit, in den Wirbelstromring 5 zusätzlich einen ebenen Stahlring (nicht gezeigt) in den Wirbelstromring 5 einzugießen, um die Erregung von Wirbelströmen durch einen verbesserten magnetischen Rückschluss zu verstärken.

In axialem Abstand zum Wirbelstromring 5 sind Magnete 7 am Kupplungselement 6 an einem äußeren Ringsbereich 6a angebracht, der sich innerhalb eines vom Wirbelstromring 5 definierten radialen Bereichs zur Kupplungsdrehachse 17 befindet. Sobald sich der Scheibenrotor 4 und das Kupplungselement 6 relativ zueinander drehen, beispielsweise im mechanisch ausgekuppelten Zustand, induzieren die Magnete 7 am Wirbelstromring 5 Wirbelströme durch deren magnetische Rückwirkung ein Drehmoment beispielsweise vom Wirbelstromring 5 auf das Abtriebselement 6 übertragen wird.

Das Kupplungselement 6 ist an seiner axial von der Kupplung nach außen gerichteten Seite als Abtriebsflansch gestaltet. An einem ringförmiger Bereich 6b kann beispielsweise ein Lüfterrad an das Kupplungselement 6 mit Hilfe der Schraubbolzen 16 befestigt werden. Ein Zentrierring 6c unterstützt die Anbringung der Nabe eines Lüfterrads koaxial zur Kupplungsdrehachse, um Unwucht und damit verbundene Schwingungen zu vermeiden. Da für das Kupplungselement 6 keine oder nur geringe Anforderungen hinsichtlich Wärmeableitung bestehen, kann der Zentrierring 6c vergleichsweise nahe um die Lagerhülse 6d verlaufen, sodass Lüfterräder mit entsprechend kleinem Zentrierdurchmesser angebracht werden können.

### Bezugszeichenliste:

- 1: Reibschaltkupplung
- 2: Gehäuse
- 2a: innere Ringwand
- 2b: äußere Ringwand
- 2c: Wand
- 2d: Kammer
- 3: Elektromagnetspule
- 4: Scheibenrotor
- 4a: äußeres Ringsegment
- 4b: mittleres Ringsegment
- 4c: inneres Ringsegment
- 5: Wirbelstromring
- 5a: Kühlkörper
- 6: Abtriebselement
- 6a: äußeres Ringsegment
- 6b: Ringsegment für Befestigung
- 6c: Zentrierring
- 6d: Lagerhülse
- 7: Magnet
- 8: Ankerscheibe
- 8a: Äußeres Ringsegment der Ankerscheibe
- 9: Feder
- 10: Welle
- 10a: Zapfen für Riemenrad
- 10b: Gewinde
- 11: Spannschraube
- 12a: Klemmscheibe
- 12b: Distanzscheibe
- 12c: Distanzscheibe
- 13a: Kugellager
- 13b: Doppelkugellager
- 14a: Zwischenraum
- 14b: Zwischenraum
- 15: Zuleitung
- 16: Schraubbolzen
- 17: Kupplungsdrehachse

## Patentansprüche

1. Elektromagnetische Reibschaltkupplung (1) umfassend einen Scheibenrotor (4) mit zwei sich flächig erstreckenden Hauptseiten, ein weiteres frei drehbar gelagertes Kupplungselement (6), das durch schaltbaren Reibkontakt vom Rotor (4) mitgenommen werden kann, sowie Elemente (5,7) zur Übertragung einer Drehbewegung nach dem Prinzip eines Wirbelstromantriebs, **dadurch gekennzeichnet, dass** ein Wirbelstromelement (5) an einem äußeren Randbereich des Scheibenrotors (4) angesetzt ist, **dass** am frei drehbaren Kupplungselement (6) Magnete (7) in der Weise angebracht sind, dass die Magnete bei einer Drehbewegung des Kupplungselements (6) bezüglich des Scheibenrotors (4) im Wirbelstromelement (5) Wirbelströme erregen, und dass der Scheibenrotor aus einem ebenen Flachteil besteht.

2. Elektromagnetische Reibschaltkupplung (1) nach Anspruch 1, **dadurch gekennzeichnet, dass** das Wirbelstromelement (5) an einem äußeren Randbereich einer sich flächig erstreckenden Hauptseite des Scheibenrotors (4) angebracht ist.

3. Elektromagnetische Reibschaltkupplung nach einem der vorhergehenden Ansprüche, **dadurch gekennzeichnet, dass** das Wirbelstromelement (5) Kühlkörper (5a) zur Ableitung von Wärme aufweist.

4. Elektromagnetische Reibschaltkupplung nach einem der vorhergehenden Ansprüche, **dadurch gekennzeichnet, dass** eine Elektromagnetspule (3) zumindest teilweise von einem Gehäuse (2) aus magnetisch leitendem Material in einer Weise umgeben ist, dass eine Fläche (2b) des Gehäuses (2) zumindest teilweise die äußere Mantelfläche des Scheibenrotors (4) berührungslos umgibt.

5. Elektromagnetische Reibschaltkupplung (1) nach einem der vorhergehenden Ansprüche, **dadurch gekennzeichnet, dass** eine Elektromagnetspule (3) zumindest teilweise von einem Gehäuse (2) aus magnetisch leitendem Material umgeben ist, wobei das Gehäuse (2) in Bezug auf den Scheibenrotor (4) und ein Element (12c) zwischen Gehäuse (2) und Kupplungsdrehachse (17), das flächig am Scheibenrotor (4) anliegt, in einer Weise aufeinander abgestimmt sind, dass der magnetische Fluss mehrheitlich durch das Element (12c) zwischen Gehäuse (2) und Kupplungsdrehachse (17) geführt wird.

6. Elektromagnetische Reibschaltkupplung (1) nach einem der vorhergehenden Ansprüche, **dadurch gekennzeichnet, dass** das Wirbelstromelement (5) Bereiche aus magnetisch leitfähigem Material aufweist.

7. Elektromagnetische Reibschaltkupplung (1) nach einem der vorhergehenden Ansprüche, **dadurch gekennzeichnet, dass** das weitere Kupplungselement (6) eine Vorrichtung (6c) aufweist, sodass eine zylindrische oder kegelstumpfförmige Bohrung bzw. Aussparung eines anzutreibenden Maschinenteils am Kupplungselement (6) zur Kupplungsdrehachse (17) mit einem Bohrungsdurchmesser zentriert angebracht werden kann, der kleiner ist als ein Durchmesser, auf dem sich Magnete (7) des Wirbelstromantriebs befinden.

## Claims

1. Electromagnetic friction coupling (1) comprising a disk rotor (4) with two planar extending main sides, a further coupling element (6) which is supported so that it is freely rotatable and which can be driven by the rotor (4) by controllable friction contact, as well as elements (5, 7) for transmitting a rotational movement according to the principle of an eddy current drive, **characterised in that** an eddy current element (5) is positioned on an outer edge area of the disk rotor (4), **in that** on the freely rotatable coupling element (6) magnets (7) are attached in such a way that the magnets excite eddy currents on a rotational movement of the coupling element (6) relative to the disk rotor (4) in the eddy current element (5) and **in that** the disk rotor consists of a planar flat part.

2. Electromagnetic friction coupling (1) according to claim 1, **characterised in that** the eddy current element (5) is fixed to an outer edge area of a planar extending main side of the disk rotor (4).

3. Electromagnetic friction coupling according to one of the preceding claims, **characterised in that** the eddy current element (5) comprises cooling elements (5a) for dissipating heat.

4. Electromagnetic friction coupling according to one of the preceding claims, **characterised in that** an electromagnetic coil (3) is at least partially surrounded by a housing (2) made of magnetically conductive material in such a way that a face (2b) of the housing (2) at least partially surrounds the outer circumferential surface of the disk rotor (4) without touching it.

5. Electromagnetic friction coupling (1) according to one of the preceding claims, **characterised in that** an electromagnetic coil (3) is surrounded at least partially by a housing (2) made of magnetically conductive material, the housing (2) adjusted in relation to the disk rotor (4) and an element (12c) between the housing (2) and the coupling axis of rotation (17) that bears flat against the disk rotor (4) are adjusted to one another in such a way that the magnetic flux is primarily conducted through the element (12c) between the housing (2) and coupling axis of rotation (17).

6. Electromagnetic friction coupling (1) according to one of the preceding claims, **characterised in that** the eddy current element (5) comprises areas of magnetically conductive material.

7. Electromagnetic friction coupling (1) according to one of the preceding claims, **characterised in that** the further coupling element (6) comprises a device (6c) so that a cylindrical or truncated cone-shaped bore or recess of a machine part to be driven can be fitted to the coupling element (6), centered in relation to the coupling axis of rotation (17) with a bore diameter that is smaller than a diameter on which magnets (7) of the eddy current drive are located.

## Revendications

1. Embrayage à friction électromagnétique (1) comprenant un disque de rotor (4) présentant deux faces principales s'étendant de façon plane, un élément d'embrayage supplémentaire (6) logé de sorte à pouvoir pivoter librement et qui peut être entraîné par le rotor (4) par le biais de surfaces de frottement embrayables, ainsi que des éléments (5, 7) pour transmettre un mouvement de rotation selon le principe d'un entraînement à courant de Foucault, **caractérisé en ce qu'**un élément à courant de Foucault (5) est placé sur un bord extérieur du disque de rotor (4), **en ce que** des aimants (7) sont placés sur l'élément d'embrayage pouvant pivoter librement (6) de telle sorte que les aimants, lors d'un mouvement de rotation de l'élément d'embrayage (6) par rapport au disque de rotor (4), génèrent des courants de Foucault dans l'élément à courant de Foucault (5), et **en ce que** le disque de rotor est constitué d'une pièce plate plane.

2. Embrayage à friction électromagnétique (1) selon la revendication 1, **caractérisé en ce que** l'élément à courant de Foucault (5) est placé sur un bord extérieur d'une face principale s'étendant de façon plane du disque de rotor (4).

3. Embrayage à friction électromagnétique selon l'une des revendications précédentes, **caractérisé en ce que** l'élément à courant de Foucault (5) est muni de dissipateurs thermiques (5a) pour évacuer la chaleur.

4. Embrayage à friction électromagnétique selon l'une des revendications précédentes, **caractérisé en ce qu'**une bobine électromagnétique (3) est entourée au moins partiellement par un carter (2) réalisé dans un matériau magnétiquement conducteur de telle sorte qu'une surface (2b) du carter (2) entoure au moins en partie l'enveloppe extérieure du disque de rotor (4) sans la toucher.

5. Embrayage à friction électromagnétique (1) selon l'une des revendications précédentes, **caractérisé en ce qu'**une bobine électromagnétique (3) est entourée au moins partiellement par un carter (2) réalisé dans un matériau magnétiquement conducteur, le carter (2), le disque de rotor (4) et un élément (12c) situé entre le carter (2) et l'axe de rotation de l'embrayage (17) et qui repose à plat sur le disque de rotor (4) sont adaptés les uns aux autres de telle sorte que le flux magnétique est guidé principalement à travers l'élément (12c) entre le carter (2) et l'axe de rotation de l'embrayage (17).

6. Embrayage à friction électromagnétique (1) selon l'une des revendications précédentes, **caractérisé en ce que** l'élément à courant de Foucault (5) présente des zones réalisées dans un matériau magnétiquement conducteur.

7. Embrayage à fiction électromagnétique (1) selon l'une des revendications précédentes, **caractérisé en ce que** l'élément d'embrayage supplémentaire (6) est muni d'un dispositif (6c) de sorte qu'un trou cylindrique ou tronconique ou un évidement d'une pièce de machine à entraîner peut être appliqué sur l'élément d'embrayage de façon centrée sur l'axe de rotation de l'embrayage (17) avec un diamètre de trou plus petit qu'un diamètre sur lequel se trouvent les aimants (7) de l'entraînement par courant de Foucault.
